# EUROPEAN PATENT APPLICATION

(11) **EP 4 293 763 A1**
(43) Date of publication of application: **20.12.2023**
(21) Application number: 22382575.3
(22) Date of filing: 15.06.2022
(51) Int. Cl.: H01M 8/0228, H01M 8/0267, H01M 8/04007, H01M 8/04223

(54) **BIPOLAR PLATE FOR USE IN A FUEL CELL DEVICE AND METHOD FOR PRODUCING THE SAME**

(71) Applicant: Airbus Operations, S.L., 28906 Getafe (ES); Airbus (S.A.S.), 31700 Blagnac (FR); Airbus Operations GmbH, 21129 Hamburg (DE)
(72) Inventor: Linde, Peter, 21129 Hamburg (DE); Lenczowski, Blanka, 31700 Blagnac (FR); Blanco-Varela, Maria Tamara, 28906 Getafe (ES)
(74) Representative: KASTEL Patentanwälte PartG mbB

(57) **Abstract**

A bipolar plate (40) for use in a fuel cell device (12), the bipolar plate (36) including an integrated ply (74), the ply (74) including one or more electrically conductive fibers (84) and being configured and electrically connectable to a power supply (38) such that the one or more fibers (84) are heated when power is supplied to the ply (74).

## Description

The invention relates to a bipolar plate for use in a fuel cell device. The invention further relates to a bipolar plate system, a fuel cell device, a fuel cell system, a method for producing a bipolar plate for use in a fuel cell device, an additive manufacturing device, a computer program, and a computer-readable medium or a data carrier signal.

A fuel cell device, for instance a proton exchange membrane (PEM) fuel cell, converts the chemical energy of a fuel, for instance hydrogen, and an oxidizing agent into electricity. The fuel for a fuel cell device may be provided in form of a cryogenic liquefied gas. For the functioning of the fuel cell device, the liquefied gas needs to be in gas form. Thus, the cryogenic liquefied gas needs to be warmed up to approximately room temperature. One way of achieving this, may be to use the heat that is produced in the fuel cell device, to warm up the cryogenic liquefied gas. However, at cold start, the fuel cell device needs a considerable amount of time in order to produce heat. While electric engines are able to deliver their specified torque very quickly even at a cold start, a fuel cell device will need more time to reach its operating temperature.

The object of the invention is to provide a device for improving the cold start behaviour of a fuel cell device.

To achieve this object, the invention provides a bipolar plate for use in a fuel cell device according to claim 1. A bipolar plate system, a fuel cell device, a fuel cell system, a method for producing a bipolar plate for use in a fuel cell device, an additive manufacturing device, a computer program, and a computer-readable medium or a data carrier signal are subject-matter of the parallel claim.

Advantageous embodiments of the invention are subject-matter of the dependent claims. In one aspect, the invention provides a bipolar plate for use in a fuel cell device, the bipolar plate including an integrated ply, the ply including one or more electrically conductive fibers and being configured and electrically connectable to a power supply such that the one or more fibers are heated when power is supplied to the ply.

Preferably, the fibers are carbon fibers, more preferably carbon nanotube fibers.

Preferably, the carbon nanotube fibers include entangled carbon nanotubes.

Preferably, the ply includes a plurality of fibers arranged substantially in parallel to each other.

Preferably, the plurality of fibers is arranged substantially along a first direction.

Preferably, the bipolar plate includes a further ply.

Preferably, the further ply includes one or more electrically conductive fibers.

Preferably, the further ply includes a plurality of fibers arranged substantially parallel to each other along a second direction.

Preferably, the second direction is different to the first direction, more preferably, the second direction is perpendicular to the first direction.

Preferably, the ply is arranged between opposite surfaces of the bipolar plate.

Preferably, the ply is arranged substantially parallel to the surfaces.

Preferably, at least one of surfaces include a bipolar plate structure.

Preferably, the surfaces are active surfaces of the bipolar plate.

Preferably, the one or more fibers are distributed over the ply, more preferably uniformly distributed over the ply.

Preferably, the one or more fibers are arranged electrically disconnected between end portions thereof.

Preferably, the bipolar plate includes an electrically conductive filament.

Preferably, the electrically conductive filament connects the end portions of a plurality of fibers.

Preferably, the electrically conductive filament includes a graphene enriched material and/or a metallic material.

Preferably, the electrically conductive filament is integrated in the bipolar plate.

Preferably, the one or more fibers are integrated in an electrically non-conductive filament.

Preferably, the electrically non-conductive filament is a thermoplastic filament.

In another aspect, the invention provides a bipolar plate system including a bipolar plate according to any of the preceding embodiments and a power supply electrically connected to the ply of the bipolar plate.

In another aspect, the invention provides a fuel cell device including at least one bipolar plate according to any of the preceding embodiments.

In another aspect, the invention provides a fuel cell system including the fuel cell device and a power supply electrically connected to the ply of the at least one bipolar plate.

In another aspect, the invention provides an aircraft including the bipolar plate, the bipolar plate system, the fuel cell device and/or the fuel cell system according to any of the preceding embodiments.

In another aspect, the invention provides a method for producing a bipolar plate for use in a fuel cell device, the method comprising the step:
Additive manufacturing of the bipolar plate according to any of the preceding embodiments.

Preferably, the method comprises at least one, several or all of the following steps:
Printing the ply of the one or more electrically conductive fibers;
Printing one or more electrically conductive filaments connecting end portions of a plurality of fibers;
Printing a bipolar plate structure on at least one of the surfaces of the bipolar plate;
Printing with a resin enriched with an electrically conductive material, preferably, enriched with graphene particles;
Printing the one or more fibers integrated in an electrically non-conductive material, preferably a thermoplastic material;
Printing an integrated filament by coaxial printing;
Printing the one or more fibers electrically disconnected between end portions of the one or more fibers;
Printing the ply with a plurality of fibers arranged substantially in parallel to each other;
Printing the one or more fibers distributed over the ply, preferably uniformly distributed over the ply;
Printing a further ply with one or more electrically conductive fibers;
Printing a further ply with a plurality of fibers arranged substantially in parallel to each other;
Changing a printing direction;
Printing a further ply with one or more fibers that are arranged substantially perpendicular to the one or more fibers of the ply.

In another aspect, the invention provides an additive manufacturing device, including a printing device suitable to print a bipolar plate according to any of the preceding embodiment, and a controlling means adapted to execute the step of the method according to any of the preceding embodiments.

In another aspect, the invention provides a computer program comprising instructions to cause the additive manufacturing device to execute the steps of the method according to any of the preceding embodiments.

In another aspect, the invention provides a computer-readable medium having stored thereon the computer program or a data carrier signal carrying the computer program. End portions of a plurality of fibers may further be electrically connected.

The ply or end portions of the one or more fibers may further be electrically connected to a power supply.

Embodiments of the invention preferably have the following advantages and effects:
Embodiments of the invention preferably provide a method and a device for improving the cold start behaviour of a fuel cell by means of integration of electrically conducting carbon nanotube fibers. The fibers may be built into thermoplastic bipolar plates by additive manufacturing.

Preferably, the additive manufacturing is achieved by a coaxial printing or a coaxial printing head.

Preferably, a single material printing head is used for the integrated electrical distributor that may print a conductive filament, containing for example a graphene enriched material and/or a metallic material. Preferably, the conductive filament covers the ends of the protruding carbon nanotube (CNT) fibers.

In order to further improve the heating effect, preferred embodiments include a resin in the bipolar plate that may be enriched with a conductive material, for example, graphene, preferably towards the electrodes.

After reaching the operating temperature, in preferred embodiments the voltage source is interrupted. The carbon nanotube fibers may assist in leading away excess heat that is produced by the warm fuel cell.

Preferred embodiments of the invention may have one, several or all of the following advantages:
- integrated CNT fibers contribute to a faster reaching of the operating temperature of a fuel cell at cold start;
- integrated CNT fibers contribute to a more uniformly distributed temperature in a fuel cell at cold start;
- by integrated CNT fibers heavy and space requiring heat exchangers may be omitted;
- no external wiring by heating spiral;
- at operating temperature, the CNT fibers may assist leading away excess heat;
- CNT fibers are well compatible with most existing resins, including thermoplastics;
- heating effect from CNT fibers may be further improved by graphene enriched resin in the bipolar plate.

Preferred embodiments of the invention provide a quick heating effect in the bipolar plate. The heating effect may co-heat the reactants and the neighbouring electrodes, as well. In this manner rapid heating may be achieved and a more uniform distribution of the heat may be achieved than with any external heating source on the perimeter of a bipolar plate.

Embodiments of the invention are now explained in more detail with reference to the accompanying drawings of which
- Fig. 1: shows a qualitative comparison of the performance of an electric engine and a conventional fuel cell device as a function of time after a cold start;
- Fig. 2: shows a comparative embodiment of a fuel cell propulsion system in which heat is applied to a pipe via a heat exchanger;
- Fig. 3: shows a comparative embodiment of a fuel cell system;
- Fig. 4: shows a comparative bipolar plate system;
- Fig. 5: shows a temperature distribution of the bipolar plate system of Fig. 4;
- Fig. 6: shows a bipolar plate according to an embodiment of the invention;
- Fig. 7: shows an enlarged view of a portion of the bipolar plate of Fig. 6;
- Fig. 8: shows an enlarged view of another portion of the bipolar plate of Fig. 6;
- Fig. 9: shows a carbon nanotube fiber;
- Fig. 10: shows an enlarged view of a portion of the carbon nanotube fiber;
- Fig. 11: shows a fuel cell system according to an embodiment of the invention;
- Fig. 12: shows a bipolar plate system according to an embodiment of the invention;
- Fig. 13: shows the temperature distribution of the bipolar plate system of Fig. 12;
- Fig. 14: a step in a method for producing the bipolar plate according to an embodiment of the invention; and
- Fig. 15: a further step in the method for producing the bipolar plate according to an embodiment of the invention.

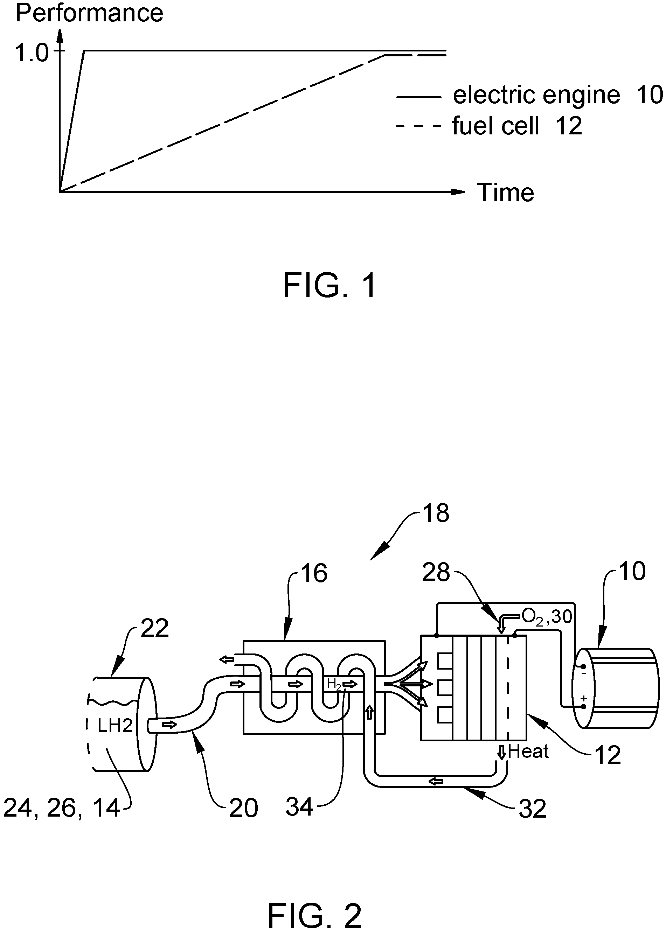

Fig. 1 shows a qualitative comparison of the performance of an electric engine 10 and a conventional fuel cell device 12 as a function of time after cold start.

As can be seen from Fig. 1, the performance of the electric engine 10 is reached quickly after cold start compared to the performance of the conventional fuel cell device 12.

Measures that are taken, include warming the reactants. If liquid hydrogen 14 is used, it needs to be warmed to 20°C. One way of achieving this is by use of a heat exchanger 16.

Fig. 2 shows a comparative embodiment of a fuel cell propulsion system 18 in which heat is applied to a pipe 20 via the heat exchanger 16.

The fuel cell propulsion system 18 includes a tank 22, the pipe 20, the fuel cell device 12, the heat exchanger 16, and the electric engine 10.

The tank 22 contains a fuel 24 in form of a cryogenic liquefied gas 26. The cryogenic liquefied gas 26 is in this case liquid hydrogen 14, but other cryogenic liquefied gases 26 which can be used as fuel 24 in the fuel cell device 12 may be possible.

The pipe 20 is in fluid connection with the tank 22 and the fuel cell device 12.

In operation, the fuel cell device 12 converts the chemical energy of the fuel 24 and an oxidizing agent 28 into electricity. Heat is produced by the fuel cell device 12. The oxidizing agent 28 in the case shown in Fig. 2 is oxygen 30 in gas form. The electricity is provided for the electric engine 10.

In the comparative embodiment of Fig. 2, the heat exchanger 16 transfers the heat produced by the fuel cell device 12 via a hot liquid pipe 32 to the pipe 20, so that in the pipe 20 the liquid hydrogen 14 is converted into hydrogen 34 in gas form.

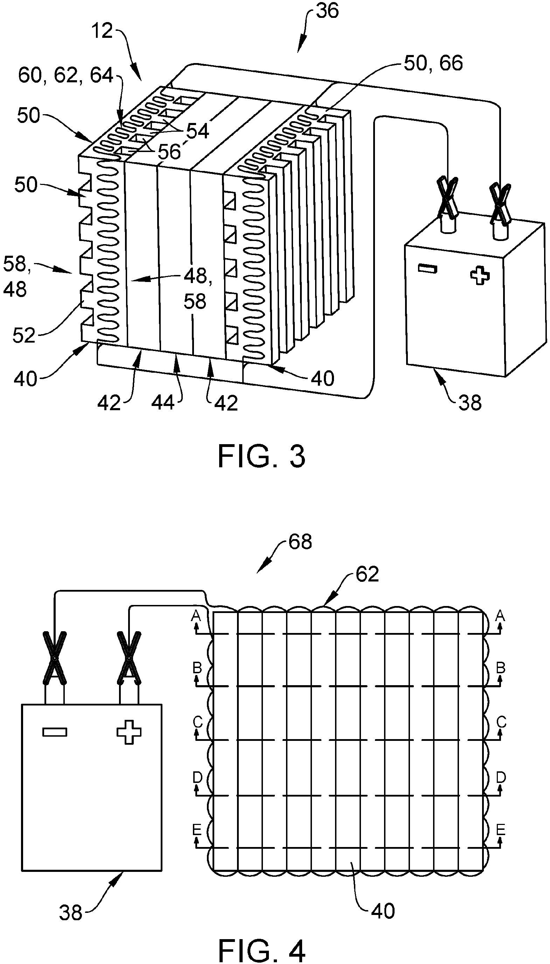

The efficiency of the heat exchange of the reactants may depend on the temperature of the used heating medium, the size of the heat exchanger 16, etc. If the fuel cell device 12 is cold, it needs to reach its operating temperature before the heat exchange will work. One possibility to shorten the warm-up time for a fuel cell device 12 is shown in Fig. 3 which depicts a comparative embodiment of a fuel cell system 36.

The fuel cell system 36 includes a fuel cell device 12 and a power supply 38.

The fuel cell device 12 includes two bipolar plates 40, electrodes 42 in form of an anode and a cathode, and a membrane 44.

The bipolar plates 40 respectively include two opposite surfaces 48 and two pairs of opposite sides 50 building a perimeter 66 of the bipolar plate 40.

A bipolar plate structure 52 is respectively arranged on the surfaces 48. The bipolar plate structure 52 includes protrusions 54 and recesses 56 which distribute hydrogen 34 and oxygen 30 in operation of the fuel cell device 12. Thus, the surfaces 48 are active surfaces 58 of the bipolar plate 40.

The bipolar plates 40 respectively include a heating device 60. In the present case, the heating device 60 includes a heating spiral 62 in form of a metallic wire 64.

The metallic wire 64 is attached to each bipolar plate 40 at the perimeter 66 thereof, In the present case, the metallic wire 64 is attached to the sides 50 of the bipolar plate 40. In other words, the metallic wire 64 is attached around the bipolar plates 40. The heating spiral 62 is electrically connected to the power supply 38.

When power is supplied to the heating spiral 62, the metallic wire 64 is heated. The heat warms up the fuel cell device 12. Depending on how the heating spiral 62 is attached, its thickness, length, and geometry, the warming effect will vary.

If attached around the perimeter 66 or the sides 50 as shown in Fig. 3, the warming effect will be the highest close to the heating spiral 62, and less in the interior of the fuel cell device 12.

This is exemplary shown in the following on a comparative bipolar plate system 68 depicted in Fig. 4.

The bipolar plate system 68 includes the bipolar plate 40 of Fig. 3. The heating spiral 62 is electrically connected to the power supply 38.

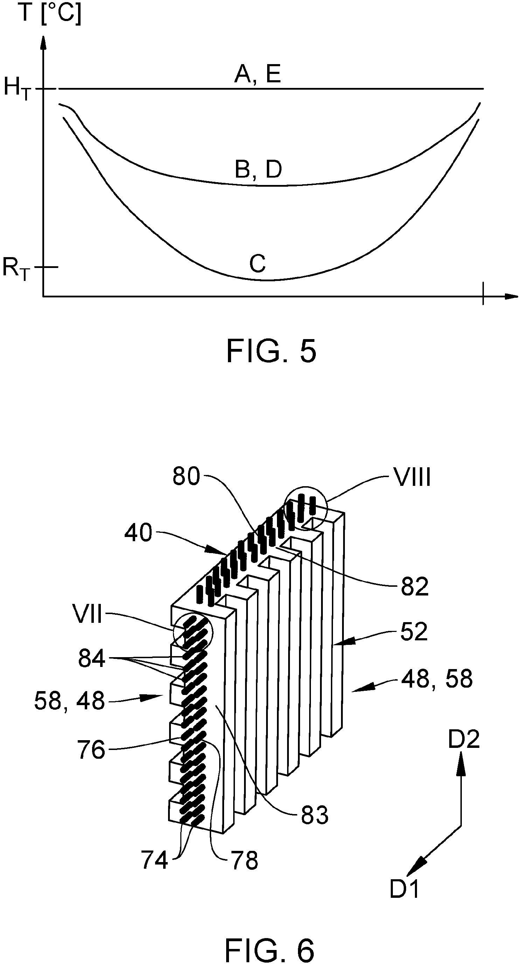

Fig. 5 shows a temperature distribution TD of the bipolar plate system 68 of Fig. 4.

The temperature distribution TD is taken from the indicated cross-sections A, B, C, D, E of the bipolar plate 40 in Fig. 4. When power is supplied to the heating spiral 62, the metallic wire 64 is heated. The heat warms up the bipolar plate 40.

As can be seen from Fig. 5, the temperature distribution TD of the cross-sections A, E close to the perimeter 66 or the sides 50 is substantially constant. The temperature distribution TD of the cross-sections B and D have a minimum in an inner region 70 of the bipolar plate 40. The temperature distribution of the cross-section C has an even larger minimum at a center 72 of the bipolar plate 40. Thus, the heating of the bipolar plate 40 is not uniform.

Fig. 6 shows a bipolar plate 40 according to an embodiment of the invention.

The bipolar plate 40 includes a plurality of plies 74. However, within the scope of the invention, the bipolar plate 40 may also include a single ply 74. In the present case, the bipolar plate 40 includes a first ply 76, a second ply 78, a third ply 80, and a fourth ply 82.

The plies 74 are integrated in the bipolar plate 40. This means, the plies 74 are arranged inside an area or region 83 which is enclosed by the bipolar plate 40.

The plies 74 are arranged between the surfaces 48 of the bipolar plate 40. In the present case, the plies 74 are arranged parallel to the surfaces 48. The surfaces 48 are the active surfaces 58 respectively having the bipolar plate structure 52.

The plies 74 respectively include a plurality of electrically conductive fibers 84. However, within the scope of the invention, each ply 74 may also include a single fiber 84.

In the case shown in Fig. 4, the fibers 84 of each ply 74 are arranged substantially in parallel to each other. The fibers 84 of the first ply 76 and the second ply 78 are arranged along a first direction D1. The fibers 84 of the third ply 80 and the fourth ply 82 are arranged along a second direction D2 which is substantially perpendicular to the first direction D1. Other arrangements are possible.

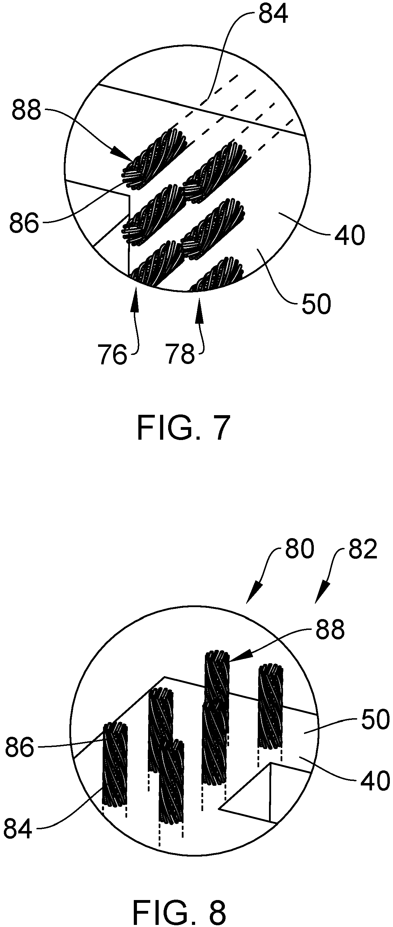

Fig. 7 and 8 show enlarged views of portions of the bipolar plate 40. The portions are taken from the circles in Fig. 6.

The fibers 84 include end portions 86. The end portions 86 of the first ply 76 and the second ply 78 are protruding from the bipolar plate 40 at one of the pairs of opposite sides 50 of the bipolar plate 40. The end portions 86 of the third ply 80 and the fourth ply 82 are protruding from the bipolar plate 40 at the other of the pairs of opposite sides 50 of the bipolar plate 40.

The fibers 84 of each ply 74 are electrically disconnected between the end portions 86. Thus, no short-circuit is produced.

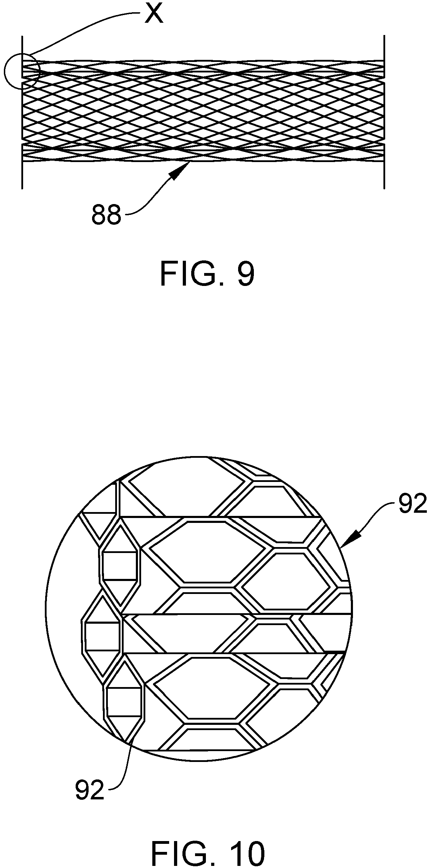

The fibers 84 of the plies 74 are carbon nanotube fibers 88. Fig. 9 shows such a carbon nanotube fiber 88.

The carbon nanotube fiber 88 displays good tensile properties, is highly conducting, and displays a strong Joule effect. The carbon nanotube fiber 88 can be built with different diameter sizes and can assume a diameter, which is common for normal carbon fibers 90, such as 5 to 10 □m. The carbon nanotube fiber 88 is mechanically robust.

Fig. 10 shows an enlarged view of a portion of the carbon nanotube fiber 88. The portion is taken from the circle in Fig. 7.

The carbon nanotube fiber 88 includes a plurality of carbon nanotubes 92. The carbon nanotubes 92 are entangled with each other or joined into the larger carbon nanotube fiber 88.

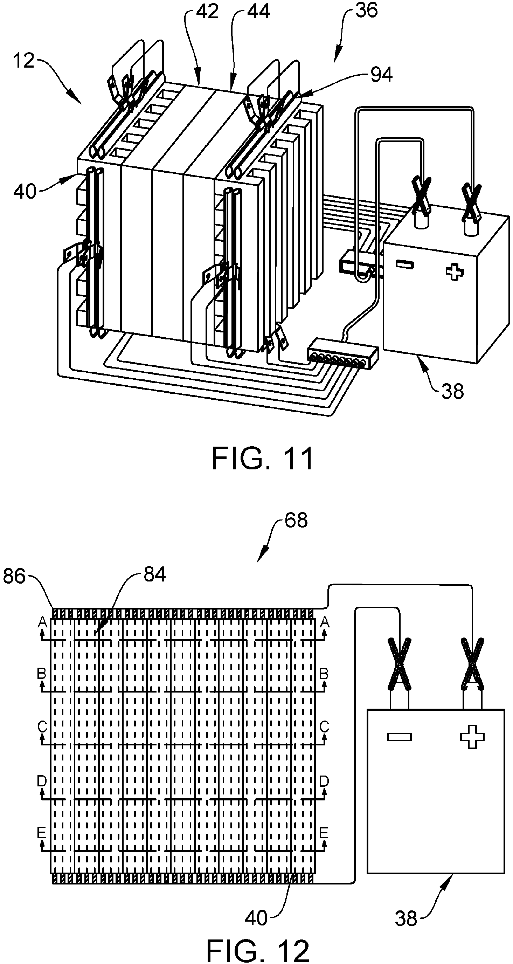

Reference is now made to Fig.11 which depicts a fuel cell system 36 according to an embodiment of the invention.

The fuel cell system 36 includes a fuel cell device 12 according to an embodiment of the invention and a power supply 38.

The fuel cell device 12 includes the bipolar plates 40 of Fig. 6.

The end portions 86 of the fibers 84 of each ply 74 are electrically connected by an external wiring 94 such that the plies 74 of the bipolar plates 40 are respectively electrically connected to the power supply 38. When power is supplied to the plies 74, the fibers 84 are heated. The heat warms up the fuel cell device 12.

Fig. 12 shows a bipolar plate system 68 according to an embodiment of the invention.

The bipolar plate system 68 includes the bipolar plate 40 of Fig. 6. The power supply 38 is electrically connected with the end portions 86 of the fibers 84 of the plies 74.

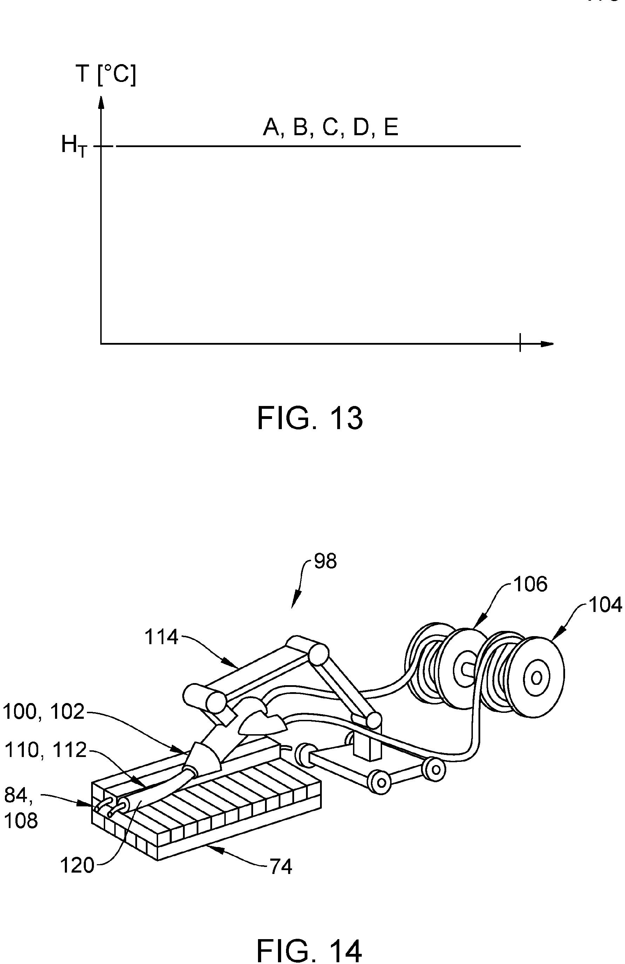

Fig. 13 shows the temperature distribution TD of the bipolar plate system 68 of Fig. 12. The temperature distribution TD is taken from the indicated cross-sections A, B, C, D, E of the bipolar plate 40 in Fig. 12. When power is supplied to the plies 74, the fibers 84 are heated. The heat warms up the bipolar plate 40.

As can be seen from Fig. 13, the temperature distribution TD of the cross-sections A, B, C, and D are substantially constant, in particular throughout the inner region 70 and the center 72. Thus, a uniform heating of the bipolar plate 40 is achieved.

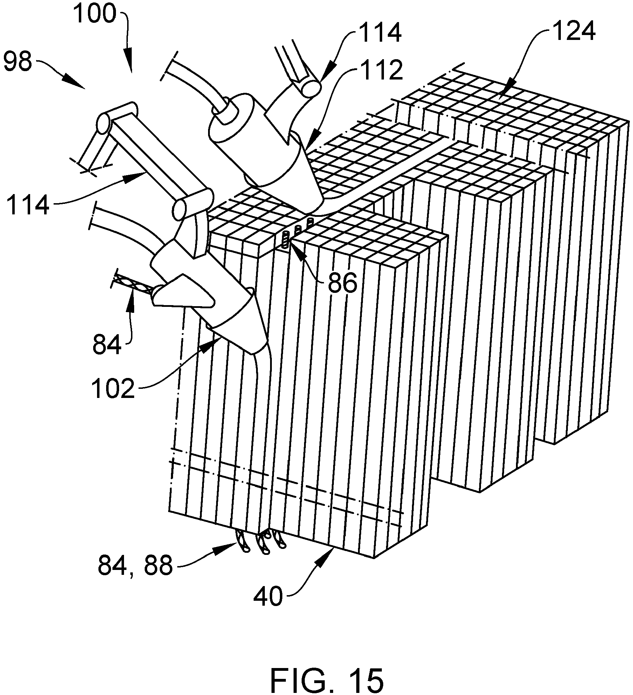

In the following, a method for producing the bipolar plate 40 according to an embodiment of the invention is described with reference to Fig. 14 and 15.

Fig. 14 shows a step of the method.

The step includes an additive manufacturing 96 of the bipolar plate 40. The additive manufacturing 96 is achieved by an additive manufacturing device 98 including a printing device 100.

In the present case, the printing device 100 includes a coaxial printing head 102.

The coaxial printing head 102 includes a first spool 104 and a second spool 106. A cable, wire or roving 108 of fibers 84 is wrapped around the first spool 104. An electrically non-conductive filament 110 is wrapped around the second spool 106. In the present case, the non-conductive filament 110 is a thermoplastic filament 112.

The additive manufacturing device 98 further includes a robotic arm 114. The coaxial printing head 102 is attached to the robotic arm 114.

The additive manufacturing device 98 further includes a controlling means 116 (not shown). The controlling means 116 is adapted to control the printing device 100 and the robotic arm 114.

A computer program 118 is stored in the controlling means 116. The computer program 118 causes the additive manufacturing device 98 to execute the following steps:
The coaxial printing head 102 prints an integrated filament 120. In other words, the coaxial printing head 102 adds the electrically non-conductive filament 110 or the thermoplastic filament 112 to the roving 108 of fibers 84. Thus, the fibers 84 are printed integrated in or surrounded by the electrically non-conductive filament 110.

A plurality of integrated filaments 120 may be printed in parallel to each other for building the ply 74. The integrated filaments 120 may be stacked building further plies 74. The integrated filaments 110 may be printed distributed uniformly over the ply 74.

Fig. 15 shows a further step of the method.

The printing device 100 further includes a single material printing head 122. The computer program 118 causes the additive manufacturing device 98 to execute the following further steps:

The single material printing head 122 prints an electrically conductive filament 124. The electrically conductive filament 124 can include a graphene enriched material 126 or a metallic material 128. The electrically conductive filament 124 covers or connects the end portions 86 of the plurality of fibers 84.

Further, printing in the vicinity of the end portions 86 may include printing with a resin 130 that is enriched with an electrically conductive material 132, for example with graphene particles 134.

According to the invention, it is possible to arrange the electrically conductive fibers 84 integrated in the bipolar plate 40 and uniformly distributed over the ply 74. Thus, uniform heating of the bipolar plate 40 and efficient warming up of the fuel cell device 12 at cold start may be achieved.

### List of reference signs:

10 electric engine
12 fuel cell device
14 liquid hydrogen
16 heat exchanger
18 fuel cell propulsion system
20 pipe
22 tank
24 fuel
26 cryogenic liquefied gas
28 oxidizing agent
30 oxygen in gas form
32 hot liquid pipe
34 hydrogen in gas form
36 fuel cell system
38 power supply
40 bipolar plate
42 electrode
44 membrane
46 perimeter
48 surface
50 side
52 bipolar plate structure
54 protrusion
56 recess
58 active surface
60 heating device
62 heating spiral
64 metallic wire
66 perimeter
68 bipolar plate system
70 inner region
72 center
74 ply
16
76 first ply
78 second ply
80 third ply
82 fourth ply
83 area or region
84 electrically conductive fiber
86 end portion
88 carbon nanotube fiber
90 carbon fiber
92 carbon nanotube
94 external wiring
96 additive manufacturing
98 additive manufacturing device
100 printing device
102 coaxial printing head
104 first spool
106 second spool
108 roving
110 electrically non-conductive filament
112 thermoplastic filament
114 robotic arm
116 controlling means
118 computer program
120 integrated filament
122 single material printing head
124 electrically conductive filament
126 graphene enriched material
128 metallic material
130 resin
132 electrically conductive material
134 graphene particles
TD temperature distribution
D1 first direction
D2 second direction

## Claims

1. A bipolar plate (40) for use in a fuel cell device (12), the bipolar plate (36) including an integrated ply (74), the ply (74) including one or more electrically conductive fibers (84) and being configured and electrically connectable to a power supply (38) such that the one or more fibers (84) are heated when power is supplied to the ply (74).

2. The bipolar plate (40) according to claim 1, whereas the fibers (84) are carbon nanotube fibers (88).

3. The bipolar plate (40) according to claim 1 or 2, whereas the ply (74) includes a plurality of fibers (84) arranged substantially parallel to each other along a first direction (D1).

4. The bipolar plate (40) according to claim 3, whereas the bipolar plate (40) includes a further ply (74) including one or more electrically conductive fibers (84), whereas the further ply (74) includes a plurality of fibers arranged substantially parallel to each other along a second direction (D2) which is preferably different to the first direction (D1), more preferably substantially perpendicular to the first direction (D1).

5. The bipolar plate (40) according to any of the preceding claims, whereas the ply (74) is arranged between opposite surfaces (48) of the bipolar plate (40), preferably substantially parallel to the surfaces (48), whereas at least one of the surfaces (48) include a bipolar plate structure (52).

6. The bipolar plate (40) according to any of the preceding claims, whereas the one or more fibers (84) are arranged electrically disconnected between end portions (86) thereof. 19

7. The bipolar plate (40) according to claim 6, including an electrically conductive filament (114) connecting the end portions (86) of a plurality of fibers (84), whereas the electrically conductive filament (114) preferably includes a graphene enriched material (116) and/or a metallic material (118).

8. The bipolar plate (40) according to any of the preceding claims, whereas the one or more fibers (84) are integrated in an electrically non-conductive filament (106), preferably a thermoplastic filament (108).

9. A bipolar plate system (68), including a bipolar plate (40) according to any of the preceding claims and a power supply (38) electrically connected to the ply (74) of the bipolar plate (40).

10. A fuel cell device (12), including at least one bipolar plate (40) according to any of the claims 1 to 8.

11. A fuel cell system (36), including a fuel cell device (12) according to claim 10 and a power supply (38) electrically connected to the ply (74) of the at least one bipolar plate (40) of the fuel cell device (12).

12. A method for producing a bipolar plate (40) for use in a fuel cell device (12), the method comprising the step:
Additive manufacturing (96) of a bipolar plate (40) according to any of the claim 1 to 8.

13. An additive manufacturing device (98), including a printing device (100) suitable to print a bipolar plate (40) according to any of the claims 1 to 8, and a controlling means (116) adapted to execute the step of the method according to claim 12.

14. A computer program (118) comprising instructions to cause the additive manufacturing device (98) according to claim 13 to execute the steps of the method according claim 12. 20

15. A computer-readable medium having stored thereon the computer program (118) according to claim 14 or a data carrier signal carrying the computer program according to claim 14.
